(19) **Europäisches Patentamt**
**European Patent Office**
**Office européen des brevets**

(11) **EP 4 712 204 A1**

(12) **EUROPEAN PATENT APPLICATION**
published in accordance with Art. 153(4) EPC

(43) Date of publication:
**18.03.2026 Bulletin 2026/12**

(21) Application number: **24858622.4**

(22) Date of filing: **28.08.2024**

(51) International Patent Classification (IPC):
*H01M 10/44* (2006.01)　　*H01M 10/42* (2006.01)
*B60L 58/13* (2019.01)

(52) Cooperative Patent Classification (CPC):
**Y02E 60/10**

(86) International application number:
**PCT/CN2024/115152**

(87) International publication number:
**WO 2025/045088 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 CN 202311115826**

(71) Applicants:
• **Zhejiang Geely Holding Group Co., Ltd.**
**Hangzhou, Zhejiang 310051 (CN)**
• **Ningbo Geely Automobile Research
& Development Co. Ltd.
Hangzhou Bay New District
Ningbo 315336 (CN)**

(72) Inventors:
• **FAN, Chengcheng**
**Hangzhou, Zhejiang 310051 (CN)**
• **NIU, Shangbing**
**Hangzhou, Zhejiang 310051 (CN)**
• **ZHANG, Haiyang**
**Hangzhou, Zhejiang 310051 (CN)**
• **LI, Hongchao**
**Hangzhou, Zhejiang 310051 (CN)**

(74) Representative: **Michalski Hüttermann & Partner
Patentanwälte mbB
Kaistraße 16A
40221 Düsseldorf (DE)**

(54) **ENERGY RELEASE DEVICE AND METHOD FOR POWER BATTERY**

(57)　　The present disclosure provides an energy release device and method for a power battery. The energy release method for a power battery comprises: acquiring a thermal runaway signal of battery cells in the power battery; and electrically communicating the power battery with a discharge element, so that the power battery is discharged to a maximum safe state of charge that satisfies a mild exothermic reaction under the condition of thermal runaway, or a state of charge below the maximum safe state of charge, wherein satisfying the mild exothermic reaction is that the temperature per unit volume of the battery cells in the power battery under the condition of thermal runaway does not exceed the temperature at which the thermal runaway is triggered. According to the solution provided by the present disclosure, the development of thermal runaway in a power battery pack can be effectively delayed, time is bought for passenger escape and subsequent thermal runaway control processing, meanwhile, the destructive power of thermal runaway is reduced, and the safety management capability of the power battery is improved.

FIG.2

EP 4 712 204 A1

**Description**

## TECHNICAL FIELD

The present disclosure relates to, but is not limited to, the field of active safety in electric vehicles, involves, but is not limited to, emergency handling methods after thermal runaway of battery packs, and particularly relates to, but is not limited to, a power battery energy release device and energy release method.

## BACKGROUND

With continuous advancement and development of automotive industry technology, vehicles have greatly facilitated people's lives. However, as vehicle ownership gradually increases, the resulting environmental pollution and energy crisis have become increasingly severe. Based on this, developing new energy vehicles has become a key breakthrough direction for automotive enterprises. The development of new energy vehicles has also become an essential path for the transformation, upgrading, and green development of the global automotive industry.

Lithium-ion power batteries have become the primary power source for hybrid and pure electric vehicles due to their advantages such as long cycle life, high energy density, high voltage, low self-discharge rate, and free of memory effect. As a core component of vehicles, power batteries are crucial to driving safety. For lithium-ion batteries, thermal runaway is the most severe safety accident. Thermal runaway in lithium-ion batteries primarily occurs when internal heat generation far exceeds heat dissipation rate, leading to accumulation of substantial heat within the lithium-ion battery, which may result in fire or battery explosion.

However, in the power battery systems of new energy vehicles in related technologies, measures such as using flame-retardant materials or optimizing battery structures are primarily employed to delay spread of thermal runaway and mitigate severity of battery fires. There is a lack of emergency management and handling measures after a fire occurs. Both prevention before thermal runaway occurs and handling after thermal runaway occurs are crucial for use safety of vehicle. Most research in related technologies focuses on the proper use of batteries and early warning detection before thermal runaway occurs, with limited studies on post-thermal runaway handling. After thermal runaway occurs, occupants have to stay away from the vehicle and wait for fire rescue, with no intervention measures available for the vehicle itself.

Related technologies achieve flame retardancy merely by optimizing battery materials or incorporating flame-retardant materials within the battery system. However, there is a lack of active emergency management for battery systems that have already experienced thermal runaway. There is a need to develop an active emergency disaster reduction technology for thermal runaway in power battery systems.

## SUMMARY

The following is a summary of topics described in detail herein. This summary is not intended to limit the scope of claims.

To address the lack of emergency and disaster mitigation measures for thermal runaway in power battery systems in related technologies, this disclosure proposes an emergency treatment method for power battery packs after thermal runaway. The method includes obtaining the maximum temperature of the battery pack during thermal runaway under different states of charge (SOC), as well as information such as diffusion time and spread range. It also determines the minimum SOC value that should be achieved through energy release under any SOC condition during thermal runaway to prevent fire or explosion of the battery pack. Based on thermal runaway warnings from the Battery Management System (BMS) or other methods, when a thermal runaway signal is detected in a battery module, the BMS disconnects the high-voltage circuit and controls the external discharge system connected to the battery module. Energy is released from the module using methods such as external resistor short-circuiting, supercapacitor bypass, high-rate discharge, or motor lock discharge to reduce the internal energy of the module experiencing thermal runaway.

Embodiments of this disclosure provide an energy release method for power battery. The energy release method includes:

acquiring a signal indicating thermal runaway in a battery cell of the power battery;
electrically connecting the power battery with a discharge element to discharge the power battery to a maximum safe state of charge (SOC) satisfying that exothermic reactions are mild during thermal runaway or an SOC lower than the maximum safe SOC, where, satisfying that exothermic reactions are mild is that a temperature per unit volume of the battery cell in the power battery during thermal runaway does not exceed its thermal runaway trigger temperature.

In some embodiments, a method for obtaining the maximum safe SOC includes:

establishing an electrochemical model describing internal electrochemical characteristics of the power battery;

establishing a thermal model describing heat generation in the power battery;

coupling the electrochemical model and the thermal model through parameter transfer via electrochemical heat generation and battery temperature where the electrochemical heat generation and heat generation from thermal runaway side reactions are jointly used as inputs to the thermal model to calculate temperature field distribution of the power battery and the battery temperature from the thermal model is used as an input to the electrochemical model to simulate electrochemical processes;

calculating by iteration the maximum safe SOC that satisfies exothermic reactions are mild during thermal runaway of the power battery.

In some embodiments, the heat generation in the power battery includes Ohmic heat, polarization heat, reversible entropy heat, and heat generation from side reactions during thermal runaway;

The heat generation from thermal runaway side reactions includes heat from exothermic decomposition of a battery separator, heat from reactions between negative electrode active material and an electrolyte, heat from reactions between positive electrode active material and the electrolyte, and heat from oxidative decomposition of the electrolyte.

In some embodiments, a discharge time of the power battery is predetermined;

The predetermined time is obtaining a shortest time for the power battery to discharge to the maximum safe SOC at a maximum current that can be carried by wires connecting the power battery to the discharge element and the discharge element itself.

In some embodiments, the thermal runaway includes any one or combination of thermal runaway caused by overheating, thermal runaway caused by overcharging, thermal runaway caused by over-discharging, or thermal runaway caused by external force.

In some embodiments, the energy release method further includes cooling the discharge element during the discharge process of the power battery.

In some embodiments, the energy release method further includes applying maximum power cooling to battery cells not yet affected by thermal runaway during the discharge process of the power battery.

In another aspect, the present disclosure provides a power battery energy release device, which includes:

a sensing module configured to send a signal indicating whether any individual cell or battery module in the power battery is experiencing thermal runaway;

a discharge module, including a switch and a discharge element connected in series between positive and negative electrodes of the power battery;

a thermal runaway management module configured to control the switch to close upon receiving a thermal runaway signal from the sensing module, thereby discharging the power battery through the discharge element.

In another aspect, this disclosure provides an electric vehicle including the aforementioned power battery energy release device.

In some embodiments, the connecting wires of the power battery energy release device are arranged in an independent wiring harness.

In another aspect, this disclosure provides a power battery energy release management device, which includes a memory, a processor, and a processor-executable program stored in the memory and executable in the processor. The processor, when executing the processor-executable program, implements the aforementioned energy release method for power battery.

In another aspect, this disclosure provides a computer-readable storage medium storing a computer-executable program thereon. When the computer-executable program is executed by a processor, the aforementioned energy release method for power battery is implemented.

The present disclosure has the following beneficial effects.

The energy release device and method provided in this disclosure can effectively delay the development of thermal runaway in power battery packs, buying time for occupant escape and subsequent thermal runaway control and handling. At the same time, the destructive force of thermal runaway is reduced and the safety management capability of power batteries is improved. The present disclosure overcomes limitations of traditional passive emergency management after thermal runaway, which relies on flame-retardant materials to slow the spread of thermal runaway. It achieves active emergency response after thermal runaway in power batteries, reduces the severity of thermal runaway, and indirectly improves the safety of power battery systems, addressing the issues of high hazard potential and rapid spread of thermal runaway in power batteries.

According to the present disclosure, energy release is enabled upon detecting thermal runaway in a battery pack, thereby delaying the development of thermal runaway within the pack, postponing appearance of open flames or even suppressing their occurrence, and buying time for occupant escape and subsequent thermal runaway control and handling.

According to the present disclosure, rapid energy release of power battery packs is enabled before severe thermal runaway occurs, based on a thermal runaway warning method provided by the power battery management system. This reduces available energy of the power battery pack, thereby minimizing destructive force of thermal runaway and improving safety management capability of the power battery.

Other features and advantages of the present disclosure will be elaborated in the subsequent description. Some of these features and advantages will become apparent from the description or be understood through the implementation of the present disclosure. Additional advantages of the present disclosure can be realized and achieved through the solutions described in the specification.

## BRIEF DESCRIPTION OF THE DRAWINGS

The accompanying drawings are provided to facilitate understanding of technical solutions of the present disclosure and form part of the specification. They are used together with embodiments of the present disclosure to explain the technical solutions and do not constitute limitations on the technical solutions of the present disclosure.

FIG. 1 is a schematic diagram of a battery pack open flame experiment at 30% SOC showing only smoke without fire or explosion (i.e., satisfying mild exothermic reactions). The battery pack was fully charged and left to stand, then subjected to 1C constant current discharge according to its actual capacity. After 0.7 hours of discharge, approximately 30% SOC remained. The open flame in Figure 1 is used to induce battery pack failure, with the outer flame temperature exceeding 500°C.

FIG. 2 is a schematic diagram of the power battery energy release device provided in the present disclosure.

## DETAILED DESCRIPTION OF THE EMBODIMENTS

To provide a clearer understanding of the objectives, technical solutions, and advantages of the present disclosure, the embodiments of the disclosure are described in detail below. It should be noted that, in case of no conflict, the embodiments of the present disclosure and the features of the embodiments may be arbitrarily combined.

Exemplary embodiments of the present disclosure provide an energy release method for a power battery. The energy release method includes:

acquiring a signal indicating thermal runaway in a battery cell of the power battery;

electrically connecting the power battery with a discharge element to discharge the power battery to a maximum safe state of charge ensuring/satisfying that exothermic reactions are mild under thermal runaway conditions or an even lower state of charge. It can be understood that after thermal runaway occurs in a battery cell of the power battery, to prevent fire or explosion, the power battery may be electrically connected with the discharge element to discharge the power battery to the maximum safe state of charge or a state of charge lower than the maximum safe state of charge.

The state of charge may be represented by SOC (State Of Charge, remaining battery capacity). At the maximum safe SOC, the temperature per unit volume of the battery cell in the power battery does not exceed its thermal runaway trigger temperature.

The discharge element may include devices used for rapid energy consumption, such as one or more of Ohmic resistors, equivalent resistors, power semiconductor devices, supercapacitors, or on-board motors.

For example, satisfying exothermic reactions are mild is that the temperature per unit volume of any battery cell in the power battery during thermal runaway does not exceed its thermal runaway trigger temperature. The temperature may range from 100°C to 300°C.

For example, satisfying exothermic reactions are mild is manifested as no fire or explosion.

For example, a method for obtaining the maximum safe SOC includes:

establishing an electrochemical model describing internal electrochemical characteristics of the power battery, establishing a thermal model describing heat generation in the power battery and coupling the two models through parameter transfer via electrochemical heat generation and battery temperature;

calculating temperature field distribution of the power battery with the electrochemical heat generation and heat generation from thermal runaway side reactions jointly used as inputs to the thermal model; and simulating electrochemical processes with a battery temperature $T$ from the thermal model used as an input to the electrochemical model;

predicting by iteration the maximum safe SOC satisfying that exothermic reactions are mild during thermal runaway of the power battery.

For example, the heat generation in the power battery includes Ohmic heat, polarization heat, reversible entropy heat, and heat generation from thermal runaway side reactions.

The heat generation from side reactions during thermal runaway includes heat from exothermic decomposition of a battery separator, heat from reactions between a negative electrode active material and an electrolyte, heat from reactions between a positive electrode active material and the electrolyte, and heat from oxidative decomposition of the electrolyte.

For example, a discharge time of the power battery is preset. The preset time is obtaining a shortest time for the power battery to discharge to the maximum safe SOC at a maximum current that can be carried by wires connecting the power battery to the discharge element and the discharge element itself.

For example, thermal runaway includes any one or more of thermal runaway caused by overheating, thermal runaway caused by overcharging, thermal runaway caused by over-discharging, or thermal runaway caused by external force.

For example, the discharge current is a maximum discharge current that does not promote thermal runaway of the power battery, or a current under a maximum discharge power that does not promote thermal runaway of the power battery.

For example, the energy release method further includes cooling the discharge element during the discharge process.

For example, the energy release method for a power battery further includes:

performing thermal runaway experiments or simulation modeling and energy discharge/release target analysis on the power battery, where multi-level power battery thermal runaway experiments may be conducted to analyze the thermal runaway triggering behavior and propagation paths at cell, battery module, system, and vehicle levels, and comprehensively determine emergency management time of the power battery under different triggering conditions (referring to time from onset of thermal runaway to large-scale thermal diffusion, open flames, etc.). Thermal runaway experiments under different SOC and voltage conditions of the power battery may be designed to analyze corresponding SOC and voltage points of thermal runaway modules with lower destructiveness, and to analyze critical SOC point at which the battery pack does not catch fire or explode after thermal runaway as the energy release target. Alternatively, model predictions can be used to analyze thermal diffusion phenomena in the battery under a condition that a single cell is forced to have thermal runaway, and information such as the system's maximum temperature, thermal diffusion speed, and thermal spread range can be analyzed;

analyzing active energy release capability of the power battery, calculating the energy and discharge rate for rapid energy release of the power battery under thermal runaway conditions, analyzing energy release boundaries of the power battery, and guiding design of the energy discharge/release system; and

designing hardware system and control system of the active emergency system. The hardware part may use high-temperature resistant wires capable of carrying large current and discharge elements of appropriate power (including release/discharge resistors, supercapacitors, on-board motors, etc.,) shunt connected to battery modules or individual cells to achieve hardware functions. A controller (including high-current relays, electronic control components, etc.) is equipped to control activation and deactivation of system.

For example, the energy release method further includes cooling the discharge element during the discharge process. To prevent the discharge element from overheating during discharge, the discharge element is connected to the thermal management system, which enables cooling of the discharge element during the discharge process.

For example, the energy release method further includes applying maximum power cooling to power batteries not yet affected by thermal runaway (e.g., battery cells not yet affected by thermal runaway) during the discharge process.

In another aspect, embodiments of the present disclosure provide a power battery energy release device. The power battery energy release device includes:

a sensing module, such as a sensor, configured to send a signal indicating whether any single cell or battery module in the power battery is experiencing thermal runaway;

a discharge module, comprising a switch and a discharge element connected in series between positive and negative electrodes of the power battery;

a thermal runaway management module, configured to control the switch to close upon receiving the thermal runaway signal from the sensing module, thereby discharging the power battery through the discharge element.

For example, the discharge module includes a controlled switch, wires, and a discharge element. When the controlled switch is closed, the discharge current of the power battery flows through the wires and the discharge element to achieve discharge.

For example, the discharge element includes any one or more of a release/discharge resistor, a supercapacitor, and an on-board motor; and the controlled switch includes a high-current resistant relay.

For example, the power battery energy release device further includes a cooling module, configured to cool the discharge module. The cooling module may include a water pump and/or a radiator fan, etc.

For example, the wires are high-current resistant wires. A method for determining the high current that the wires and the relay can carry includes: calculating resistance value of the discharge element based on the preset discharge/release time of the power battery and the capacity of the power battery; and determining the high current that can be carried by the wires and the relay based on the maximum voltage of the power battery and the resistance value of the discharge element.

In another aspect, embodiments of the present disclosure provide an electric vehicle. The electric vehicle includes the aforementioned power battery energy release device.

For example, connecting wires of the power battery energy release device are arranged in an independent wiring harness.

For example, the connecting wires of the power battery energy release device are independently arranged, and the connecting wires of the power battery energy release device and drive lines and conventional signal transmission lines of the electric vehicle are placed in different wiring harnesses. The connecting wires may include signal connecting wires, wires carrying high currents, and other connecting wires.

For example, the discharge module is further configured to have its temperature controlled by the vehicle's thermal management system to avoid excessive temperatures.

For example, the signal control module is the battery management system (BMS) of the electric vehicle.

For example, the power battery may be the entire power battery pack of the electric vehicle, a battery module within the entire power pack, or a single cell or a combination of multiple cells.

For example, the present disclosure provides the following Embodiment 1.

The power battery in this embodiment is a lithium-ion battery suitable for vehicle power, internally composed of several battery modules connected in series and parallel, with no specific requirements for the battery system or shape. The battery modules within the battery pack are set to 12 in series, the system is a ternary lithium-ion battery, the rated voltage is 44.4V, the maximum voltage is 49.8V, and the total capacity of battery modules is 50Ah.

The release/discharge time is set to 20 minutes to 30 minutes.

The release/discharge target is set such that the experimental phenomenon after thermal runaway of the power battery is no fire or explosion (i.e., satisfying exothermic reactions are mild). Through simulation modeling, the phenomenon at the maximum safe state of charge that satisfies exothermic reactions are mild during thermal runaway of the power battery is obtained as a maximum temperature not exceeding 200°C (i.e., the maximum temperature of the battery cell satisfying exothermic reactions are mild under thermal runaway conditions is 200°C). Iterative simulation calculations conclude that under 30% SOC condition, the system only smokes without catching fire after thermal runaway, and temperature increase due to the self-generated heat of the power battery does not go beyond 200°C. Therefore, 30% SOC is set as the discharge target value, and the emergency management system is designed based on the energy of the released/discharged battery module and the release time.

In this embodiment, the power battery may be set to discharge at a 3C rate, i.e., fully discharged in 20 minutes, with an average discharge current of 150A. This means the wires connecting the discharge module and between the discharge module and the power battery must be capable of carrying at least approximately 150A of current.

In this embodiment, the power battery may also be set to discharge to below 30% SOC within 30 minutes, i.e., 0.7Q/0.5h = 1.4C, meaning discharging at a 1.4C rate. The wires connecting the discharge module and between the discharge module and the power battery must be capable of carrying at least approximately 70A of current (50A × 1.4C).

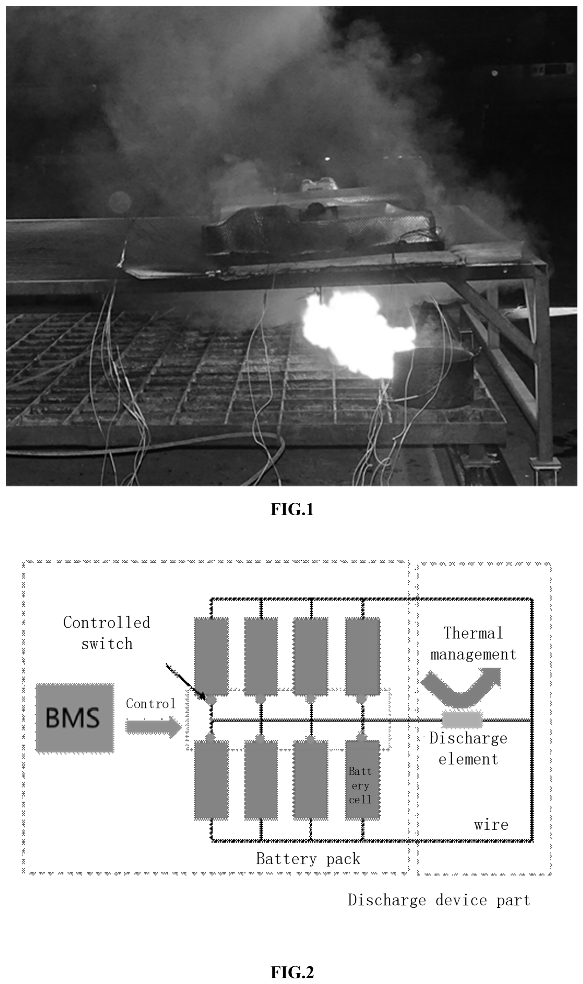

In this embodiment, as shown in Figure 2, a BMS may be used to control the connection and disconnection between the battery module and the discharge module. The BMS controls the battery pack and its internal battery modules through a manual switch, and when necessary, connects the battery module to the discharge module via high-temperature resistant wires for rapid discharge. The discharge module may be cooled through components such as the thermal management system under control of BMS.

In this embodiment, when the BMS, cloud, or other thermal runaway identification system detects that thermal runaway has occurred in a battery module within the battery pack, or conditions such as impacts that may lead to thermal runaway, the BMS controls the electrical connection between that battery module and the discharge module.

In this embodiment, the controlled switch controlled by the BMS and for electrical connection between the thermal runaway module and the discharge module may utilize, but is not limited to, devices such as high-current relays. The controlled switch is strictly prohibited from being closed under non-thermal runaway conditions and must not open due to BMS control failure once activated during thermal runaway. The wires connecting the thermal runaway module to the discharge module must be capable of carrying high currents, such as approximately 150A, for at least the predetermined release/discharge duration, while also exhibiting excellent high-temperature resistance. These high-current-carrying wires, along with the signal lines controlling the switch, may be installed separately to avoid interference with the conventional wiring harnesses of the electric vehicle.

In this embodiment, energy-consuming components such as Ohmic resistors and power semiconductor devices may be employed to rapidly dissipate energy. Simultaneously, to prevent overheating of the discharge module, the vehicle's thermal management system may be utilized for heat dissipation of the discharge module.

For example, the present disclosure provides the following Embodiment 2:

A method for obtaining the maximum safe state of charge may involve conducting thermal runaway simulation of the power battery and performing iterative simulation calculations using an electrochemical-thermal-side reaction coupling model.

The electrochemical-thermal-side reaction coupling model used for simulating thermal runaway consists of two parts: a one-dimensional electrochemical model and a three-dimensional thermal model. These two parts are coupled through parameter transfer via electrochemical heat generation Qh and battery temperature T from the thermal model. The electrochemical model is established based on the Newman electrochemical model, and the resulting electrochemical heat generation Qh is coupled into the three-dimensional thermal model. Both the electrochemical heat generation Qh and the heat generated from thermal runaway side reactions serve as heat source inputs to calculate the temperature field distribution of the power battery. The temperature T from the three-dimensional thermal model is coupled back into the electrochemical model as an input condition for simulating electrochemical processes.

Input parameters are substituted for calculation into: solid-phase lithium-ion diffusion equation, liquid-phase lithium-ion mass conservation equation, solid-phase charge conservation equation, liquid-phase charge conservation equation, electrode reaction kinetics equation, SEI film decomposition exothermic reaction equation, reaction equation between negative electrode active material and electrolyte, reaction equation between positive electrode active material and electrolyte, and electrolyte oxidative decomposition reaction equation. Parameters such as battery potential, electrochemical heat generation, side reaction heat generation, and battery temperature are sequentially derived to determine the extent of battery thermal runaway, thereby obtaining the maximum safe SOC value that satisfies mild exothermic reactions during power battery thermal runaway, as shown in FIG. 1.

The following parameters of the power battery are obtained:

Solid-phase lithium-ion concentration $C_s$, Solid-phase lithium-ion diffusion coefficient Ds, Radial distance r inside spherical particles, Reaction time t;

Volume fraction of electrolyte $\varepsilon_e$, Liquid-phase lithium-ion concentration $C_e$, Reaction time t, Effective diffusion coefficient of lithium ions in the liquid phase $D_{eff}$, Transference number of lithium ions t+, the length direction x of the electrode;

Solid-phase potential $\varphi_s$;

Solid-phase conductivity $\sigma$, Solid-phase volume fraction of positive and negative electrode active materials $\varepsilon_s$;

Average activity coefficient of electrolyte f, Liquid-phase potential $\varphi_e$;

Liquid-phase lithium-ion conductivity $\kappa$;

Total active surface area of battery electrode Se, Anodic transfer coefficient $\alpha_a$, Cathodic transfer coefficient $\alpha_c$;

Maximum lithium intercalation concentration in solid phase $C_{s,max}$, Surface lithium intercalation concentration of solid spherical particles $C_{se}$;

Equilibrium potential Ui of positive or negative electrode;

Effective solid-phase diffusion coefficient $\kappa_D^{eff}$;

Dimensionless number of metastable content in SEI film $C_{sei}$; Pre-exponential factor of reaction $A_{sei}$; Activation energy of reaction $E_{a,sei}$; Reaction order $m_{sei}$; Reaction rate $R_{sei}$; Carbon content $W_c$; Unit heat generation of reaction $H_{sei}$;

Fraction of lithium in negative electrode material that can react with electrolyte $C_{ne}$; Pre-exponential factor of reaction $A_{ne}$; Activation energy of reaction $E_{a,ne}$; Reaction order $m_{ne}$; Reaction rate $R_{ne}$; Unit heat generation of reaction $H_{ne}$;

Reaction conversion rate of positive electrode material $\alpha$; Pre-exponential factor of reaction $A_{pe}$; Activation energy of reaction $E_{a,pe}$; Reaction orders $m_{pe,p1}$ and $m_{pe,p2}$; Reaction rate $R_{pe}$; Content of positive active material $W_p$; Unit heat generation of reaction $H_{pe}$;

Electrolyte content $C_e$; Pre-exponential factor of reaction $A_e$; Activation energy of reaction $E_{a,e}$; Reaction order $m_e$; Reaction rate $R_e$; Electrolyte content $W_e$; Unit heat generation of reaction $H_e$;

Battery density $\rho$; Specific heat capacity of battery $C_p$; Thermal conductivity of battery $\lambda$; Volumetric heat generation rate of battery $\dot{Q}$;

Convective heat transfer coefficient of battery to environment h; Emission coefficient of battery surface $\varepsilon$, value set based on battery casing material; Temperature of battery surface $T_0$, Ambient temperature $T_\infty$.

These parameters are substituted into corresponding formulas for coupled iteration to sequentially derive parameters such as battery potential, electrochemical heat generation, side reaction heat generation, and battery temperature, determining the extent of battery thermal runaway and thereby simulating and calculating to obtain the maximum safe state of charge.

① Electrochemical Model:

**The** present disclosure employs a P2D (pseudo-two-dimensional) model based on porous electrode theory to describe the internal electrochemical characteristics of lithium-ion batteries. Equations involved in the model are as follows:

(a) Mass Conservation Equations:

(1) Solid-Phase Lithium-Ion Diffusion Equation:

**The** diffusion process of lithium ions inside active particles is described using Fick's law of diffusion, without considering possible volume changes of the spherical particles:

$$\frac{\partial c_s}{\partial t} = \frac{D_s}{r^2}\frac{\partial}{\partial r}\left(r^2\frac{\partial c_s}{\partial r}\right) = D_s\left(\frac{2}{r}\frac{\partial c_s}{\partial r} + \frac{\partial^2 c_s}{\partial r^2}\right) \quad \ldots\ldots\ldots\ldots\ldots \quad (1)$$

In formula (1): Cs represents the solid-phase lithium-ion concentration, with the unit of mol/m$^3$; Ds denotes the solid-phase lithium-ion diffusion coefficient, with the unit of m$^2$·s$^{-1}$; r is the radial distance within the spherical particle, with the unit of m; t stands for time, with the unit of s.
The left side of the equation represents change in solid-phase lithium-ion concentration over time.

(2) Liquid-Phase Lithium-Ion Mass Conservation Equation:

When lithium ions are deintercalated from the solid-phase spherical particles and enter the liquid phase, they undergo diffusion and migration within the electrolyte. This process is described using concentrated solution theory:

$$\varepsilon_e \frac{\partial c_e}{\partial t} = \frac{\partial}{\partial x}\left(D_{eff}\frac{\partial c_e}{\partial x}\right) + \frac{1-t_+}{F}j \quad \ldots\ldots\ldots\ldots\ldots \quad (2)$$

In formula (2): $\varepsilon_e$ is the volume fraction of the electrolyte, with the with the unit of %; Ce is the liquid-phase lithium-ion concentration, with the unit of mol/m$^3$; Deff is the effective diffusion coefficient of lithium ions in the liquid phase, with the unit of m$^2$·s$^{-1}$; t+ is the transference number of lithium ions, dimensionless; F is the Faraday constant, with the unit of C/mol; x is the length direction of the electrode plate, with the unit of m; j is the local current density, calculated according to formula (3), with the unit of A/m$^3$.

(b) Charge Conservation Equations:

(1) Solid-Phase Charge Conservation Equation

The solid-phase charge distribution in the positive and negative electrode active materials follows Ohm's law:

$$\frac{\partial}{\partial x}\left(\sigma_{eff}\frac{\partial \phi_s}{\partial x}\right) = j \quad \ldots\ldots\ldots\ldots\ldots\ldots\ldots \quad (3)$$

In formula (3): $\sigma_{eff}$ is the effective solid-phase conductivity, calculated using formula (4), with the unit of S·m$^{-1}$; x is the length direction of electrode, with the unit of m; $\varphi_s$ is the solid-phase potential, with the unit of V.
The effective solid-phase conductivity $\sigma_{eff}$ in formula (3) is calculated using formula (4):

$$\sigma_{eff} = \sigma \varepsilon_s^{Brug} \quad \ldots\ldots\ldots\ldots\ldots\ldots\ldots \quad (4)$$

In formula (4): $\sigma$ is the solid-phase conductivity, with the unit of S·m$^{-1}$; $\varepsilon_s$ is the solid-phase volume fraction of the positive and negative electrode active materials; Brug is the Bruggeman coefficient.

(2) Liquid-Phase Charge Conservation Equation

$$\frac{\partial}{\partial x}\left(\kappa_{\text{eff}}\frac{\partial \phi_e}{\partial x}\right) + \frac{\partial}{\partial x}\left[\frac{2RT\kappa_{\text{eff}}}{F}(t_+ - 1)\left(1 + \frac{d\ln f}{d\ln c_e}\right)\frac{\partial \ln c_e}{\partial x}\right] + j = 0 \qquad \cdots (5)$$

In formula (5): x is the length direction of electrode, with the unit of m; f is the average activity coefficient of the electrolyte; $\varphi_e$ is the liquid-phase potential, with the unit of V; R is the ideal gas constant, with the unit of $mol^{-1}\cdot K^{-1}$; F is the Faraday constant, with the unit of C/mol; $t_+$ is the transference number of lithium ions; $C_e$ is the liquid-phase lithium-ion concentration, with the unit of $mol/m^3$; T is the battery temperature, with the unit of K; j is the local current density, calculated according to formula (3), with the unit of $A/m^3$; $\kappa_{\text{eff}}$ is the effective conductivity of lithium ions in the electrolyte, with the unit of $S\cdot m^{-1}$, and its correction is shown in formula (5.1):

$$\kappa_{\text{eff}} = \kappa \varepsilon_e^{\text{Brug}} \dots\dots\dots\dots\dots\dots\dots\dots (5.1)$$

In formula (5.1): $\kappa_{\text{eff}}$ is the effective conductivity of lithium ions in the electrolyte, with the unit of $S\cdot m^{-1}$; $\kappa$ is the liquid-phase lithium-ion conductivity, with the unit of $S\cdot m^{-1}$; $\varepsilon_e$ is the volume fraction of the electrolyte, with the unit of %.

(c) Electrode Reaction Kinetics Equation:

Electrochemical process at an interface between the solid phase surface and the liquid-phase electrolyte is described using the Butler-Volmer equation:

$$j = s_e i_0 \left[\exp\left(\frac{\alpha_a F}{RT}\eta\right) - \exp\left(-\frac{\alpha_c F}{RT}\eta\right)\right] \dots\dots\dots (6)$$

In formula (6): j is the local current density, with the unit of $A/m^3$; $S_e$ is the total active surface area of the battery electrode, with the unit of $m^2$; R is the ideal gas constant, with the unit of $mol^{-1}\cdot K^{-1}$; F is the Faraday constant, with the unit of C/mol; T is the battery temperature, with the unit of K; $\eta$ is the electrode overpotential, calculated according to formula (8), with the unit of V; $\alpha_a$ is the anodic transfer coefficient, dimensionless; $\alpha_c$ is the cathodic transfer coefficient, dimensionless; $i_0$ is the exchange current density, calculated according to formula (7), with the unit of $A/m^2$.

The calculation formula for the exchange current density $i_0$ is as follows:

$$i_0 = kFc_e^{\alpha_a}\left(c_{s\max} - c_{se}\right)^{\alpha_a} c_{se}^{\alpha_c} \dots\dots\dots (7)$$

In formula (7): k is the electrode reaction rate constant, with the unit of $m^{2.5}\cdot mol^{-0.5}\cdot s^{-1}$; F is the Faraday constant, with the unit of C/mol; $\alpha_a$ is the anodic transfer coefficient, dimensionless; $\alpha_c$ is the cathodic transfer coefficient, dimensionless; $C_e$ is the liquid-phase lithium-ion concentration, with the unit of $mol/m^3$; $C_{s\max}$ is the maximum solid-phase lithium intercalation concentration, with the unit of mol; $C_{se}$ is the surface lithium intercalation concentration of the solid-phase spherical particles, with the unit of mol.

Overpotential characterizes the phenomenon where the electrode potential deviates from the equilibrium potential due to the electrochemical reaction of lithium ions on the surface of the solid-phase particles. Its calculation formula is as follows:

$$\eta = \phi_s - \phi_e - U_i, i = n, p \dots\dots\dots\dots (8)$$

In the formula: $\varphi s$ is the solid-phase potential, with the unit of V; $\varphi e$ is the liquid-phase potential, with the unit of V;

Ui is the equilibrium potential of the positive or negative electrode, with the unit of V.

Temperature affects the electrochemical processes inside the battery. Parameters related to temperature in the model require certain corrections, including the diffusion coefficients and conductivities of the solid and liquid phases. The Arrhenius equation is used for correction:

$$\Phi = \Phi_{ref} \exp\left[\frac{E_{act,\Phi}}{R}\left(\frac{1}{T_{ref}} - \frac{1}{T}\right)\right] \qquad \ldots\ldots\ldots\ldots (9)$$

In the formula: $\Phi$ represents the relevant parameter related to temperature and requiring correction, dimensionless; $E_{act,\Phi}$ is the activation energy, with the unit of kJ/mol; $\Phi_{ref}$ is the value of the relevant parameter at the reference temperature, dimensionless; $T_{ref}$ is the reference temperature, with the unit of K; T is the battery temperature, with the unit of K; R is the ideal gas constant, with the unit of $mol^{-1} \cdot K^{-1}$.

② Thermal Model

The heat generation in a lithium-ion battery mainly includes four parts:

$$\dot{Q} = \dot{Q}_o + \dot{Q}_p + \dot{Q}_s + \dot{Q}_{chem} \qquad \ldots\ldots\ldots\ldots (10)$$

In Equation (10): $\dot{Q}_o$ is Ohmic heat, $\dot{Q}_p$ is polarization heat, $\dot{Q}_s$ is reversible entropic heat, and $\dot{Q}_{chem}$ is the heat generation rate from side reactions during thermal runaway:

$$\dot{Q}_o = \sigma_{eff}\left(\frac{\partial\phi_s}{\partial x}\right)^2 + \kappa_{eff}\left(\frac{\partial\phi_e}{\partial x}\right)^2 + \kappa_D^{eff}\frac{\partial\ln c_e}{\partial x}\frac{\partial\phi_e}{\partial x} \qquad \ldots\ldots\ldots\ldots (10.1)$$

$$\dot{Q}_p = j\left(\phi_s - \phi_e - U_i\right) \qquad \ldots\ldots\ldots\ldots\ldots\ldots (10.2)$$

$$\dot{Q}_s = -jT\Delta S /\left(nF\right) \qquad \ldots\ldots\ldots\ldots\ldots\ldots (10.3)$$

In formulas (10.1) to (10.3): $\varphi_s$ is the solid-phase potential, with the unit of V; $\varphi_e$ is the liquid-phase potential, with the unit of V; x is the length direction of electrode, with the unit of m; $C_e$ is the liquid-phase lithium-ion concentration, with the unit of $mol/m^3$; $\sigma_{eff}$ is the effective solid-phase conductivity, with the unit of $S \cdot m^{-1}$; j is the local current density, with the unit of $A/m^3$; $\kappa_{eff}$ is the effective conductivity of lithium ions in the electrolyte, with the unit of $S \cdot m^{-1}$, corrected as shown in formula (5.1); $\kappa_D^{eff}$ is the effective solid-phase diffusion coefficient, with the unit of $m^2$; T is the battery temperature, with the unit of K; F is the Faraday constant, with the unit of C/mol; $\Delta S$ is the entropy change of the electrode system after the reduction reaction of a unit amount of reactants at the interface; $\Delta S$=(dUi/dT)nF, n is the lithium-ion charge number, with a value of 1; Ui is the equilibrium potential of the positive or negative electrode, with the unit of V.

③ Thermal Runaway Side Reaction Heat Generation Model:

The heat generation model for side reactions during thermal runaway is established by combining the Arrhenius equation from chemical reaction kinetics. The main side reactions included in this model are SEI film decomposition exothermic reaction; reaction between negative electrode active material and electrolyte; reaction between positive electrode active material and electrolyte; and oxidative decomposition reaction of electrolyte. The calculation formula for the heat generation rate is:

$$\dot{Q}_{chem} = \dot{Q}_{sei} + \dot{Q}_{ne} + \dot{Q}_{pe} + \dot{Q}_{ele} \qquad \ldots\ldots\ldots\ldots (11)$$

The exothermic decomposition reaction of the SEI film is derived according to formulas (11.1) to (11.3):

$$R_{sei}(T, C_{sei}) = A_{sei} \exp\left(-\frac{E_{a,sei}}{RT}\right) C_{sei}^{m_{sei}} \quad \cdots\cdots\cdots\cdots\cdots (11.1)$$

$$\frac{dC_{sei}}{dt} = -R_{sei} \quad \cdots\cdots\cdots\cdots\cdots (11.2)$$

$$\dot{Q}_{sei} = H_{sei} W_c R_{sei} \quad \cdots\cdots\cdots\cdots\cdots (11.3)$$

In formulas (11.1) to (11.3): $C_{sei}$ is the dimensionless number of the metastable content in the SEI film; $A_{sei}$ is the pre-exponential factor of the reaction, with the unit of $s^{-1}$; $E_{a,sei}$ is the activation energy of the reaction, with the unit of J/mol; R is the universal gas constant, with a value of 8.314 J/mol·K; T is the battery temperature, with the unit of K; $m_{sei}$ is the reaction order; $R_{sei}$ is the reaction rate, with the unit of $s^{-1}$; $W_c$ is the carbon content, with the unit of kg/m$^3$; $H_{sei}$ is the unit heat generation of this reaction, with the unit of J/kg$^{-1}$.

The reaction between the negative electrode active material and the electrolyte is derived according to formulas (11.4) to (11.6):

$$R_{ne}(T, C_{ne}) = A_{ne} \exp\left(-\frac{E_{a,ne}}{RT}\right) C_{ne}^{m_{ne}} \quad \cdots\cdots (11.4)$$

$$\frac{dC_{ne}}{dt} = -R_{ne} \quad \cdots\cdots\cdots\cdots\cdots (11.5)$$

$$\dot{Q}_{ne} = H_{ne} W_c R_{ne} \quad \cdots\cdots\cdots\cdots\cdots (11.6)$$

In formulas (11.4) to (11.6): $C_{ne}$ is the fraction of lithium in the negative electrode material that can react with the electrolyte, dimensionless; $A_{ne}$ is the pre-exponential factor of the reaction, $s^{-1}$; $E_{a,ne}$ is the activation energy of the reaction, J/mol; R is the universal gas constant, with a value of 8.314 J/(mol·K); T is the battery temperature, with the unit of K; $m_{ne}$ is the reaction order; $R_{ne}$ is the reaction rate, $s^{-1}$; $W_c$ represents the carbon content, kg/m$^3$; $H_{ne}$ is the unit heat generation of this reaction, J/kg$^{-1}$.

The exothermic reaction between the positive electrode active material and the electrolyte is derived according to formulas (11.7) to (11.9):

$$R_{pe}(T, \alpha) = A_{pe} \alpha^{m_{pe,p1}} (1-\alpha)^{m_{pe,p2}} \exp\left(-\frac{E_{a,pe}}{RT}\right) \quad \cdots\cdots\cdots\cdots (11.7)$$

$$\frac{d\alpha}{dt} = R_{pe} \quad \cdots\cdots\cdots\cdots\cdots\cdots (11.8)$$

$$\dot{Q}_{pe} = H_{pe} W_p R_{pe} \quad \cdots\cdots\cdots\cdots\cdots\cdots (11.9)$$

In formulas (11.7) to (11.9): $\alpha$ is the reaction conversion rate of the positive electrode material, representing the proportion of positive electrode material that has undergone the exothermic reaction to the total positive electrode material, dimensionless; $A_{pe}$ is the pre-exponential factor of the reaction, $s^{-1}$; $E_{a,pe}$ is the activation energy of the reaction, J/mol; R is the universal gas constant, with a value of 8.314 J/mol K; T is the battery temperature, with the unit of K; $m_{pe,p1}$ and $m_{pe,p2}$ are the reaction orders; $R_{pe}$ is the reaction rate, $s^{-1}$; $W_p$ is the content of the positive electrode active material, $kg/m^3$; $H_{pe}$ is the unit heat generation of this reaction, $J/kg^{-1}$.

The oxidative decomposition reaction of the electrolyte is derived according to formulas (11.7) to (11.9):

$$R_e(T, C_e) = A_e \, exp\left(-\frac{E_{a,e}}{RT}\right) C_e^{m_e} \qquad \ldots\ldots\ldots\ldots\ldots \, (11.10)$$

$$\frac{dC_e}{dt} = -R_e \qquad \ldots\ldots\ldots\ldots\ldots\ldots \, (11.11)$$

$$\dot{Q}_{ele} = H_e W_e R_e \qquad \ldots\ldots\ldots\ldots\ldots\ldots \, (11.12)$$

where: $C_e$ is the liquid-phase lithium-ion concentration, with the unit of $mol/m^3$; $A_e$ is the pre-exponential factor of the reaction, $s^{-1}$; $E_{a,e}$ is the activation energy of the reaction, J/mol; me is the reaction order; R is the universal gas constant, with a value of 8.314 J/(mol·K); T is the battery temperature, with the unit of K; $R_e$ is the reaction rate, $s^{-1}$; $W_e$ is the electrolyte content, $kg/m^3$; $H_e$ is the unit heat generation of this reaction, $J/kg^{-1}$.

④ Heat Transfer Model:

While heat is generated during thermal runaway of the power battery, heat exchange with the external environment also occurs, belonging to an unsteady heat transfer process. The application object of the battery thermal effect model is any micro-element within the battery:

$$\rho C_p \frac{\partial T}{\partial t} = \nabla \cdot (\lambda \nabla T) + \dot{Q} \qquad \ldots\ldots\ldots\ldots\ldots \, (12)$$

In Equation (12): $\rho$ is the battery density, with the unit of $kg/m^3$; $C_p$ is the specific heat capacity of the battery, with the unit of J/(kg·K); T is the battery temperature, with the unit of K; $\lambda$ is the thermal conductivity of the battery, with the unit of W/(m·K); $\dot{Q}$ is the volumetric heat generation rate of the battery, with the unit of $W/m^3$.

The boundary conditions for heat transfer on the battery surface is set to include convective heat transfer and radiative heat transfer, and the boundary condition is set as:

$$-\lambda \frac{\partial T}{\partial n}\bigg|_{0,\ \infty} = h(T_0 - T_\infty) + \varepsilon\sigma(T_0^4 - T_\infty^4) \qquad \ldots\ldots\ldots\ldots\ldots \, (13)$$

where: h is the convective heat transfer coefficient between the battery and the environment, with the unit of W/(m²·K); $\sigma = 5.67 \times 10^{-8}$ W·m⁻²·K⁻⁴ which is the Stefan-Boltzmann constant; $\varepsilon$ is the emission coefficient of the battery surface, which is set, for example, to 0.3 based on the battery casing material; To is the temperature of the battery surface; $T_\infty$ is the ambient temperature, which is set, for example, to 30°C; $\frac{\partial T}{\partial n}\bigg|_{0,\ \infty}$ is the heat flux density dissipated from the battery surface to the environment.

In the model, the battery is in a fully charged state, and the boundary condition is adiabatic, meaning there is no heat exchange between the battery and the external environment. All heat generated/absorbed by the battery materials is used to change its own temperature. The thermal simulation and electrochemical simulation of the lithium-ion battery are both conducted through the concentration changes of lithium ions in the positive and negative electrode materials and the electrolyte. Therefore, the thermal-electrochemical coupled simulation model of the lithium-ion battery also couples the thermal simulation model and the electrochemical simulation model through the lithium-ion concentration. Furthermore, according to the principle of energy conservation, all heat generated in the lithium-ion battery is directly related to the battery's temperature change. Thus, the energy aspects of the lithium-ion battery's thermal simulation and electrochemical simulation are coupled through the battery temperature/energy conservation.

In another aspect, embodiments of the present disclosure provide a power battery energy release management device. The power battery energy release management device includes a memory, a processor, and a processor-executable program stored in the memory and executable on the processor. The steps of the power battery energy release method described above are implemented when the processor-executable program is executed by the processor.

The device includes: at least one processor, at least one communication interface, at least one memory, and at least one communication bus. Optionally, the communication interface may be an interface of a communication module, such as an interface of a GSM module. The processor may be a central processing unit (CPU), or an Application Specific Integrated Circuit (ASIC), or one or more integrated circuits configured to implement the embodiments of the present disclosure. The memory may include high-speed RAM and may also include non-volatile memory, such as at least one disk storage. The memory stores a program, and the processor calls the program stored in the memory to execute some or all of the method embodiments described above.

In another aspect, the present disclosure provides a computer-readable storage medium. The computer-readable storage medium stores a computer-executable program thereon. The steps of the power battery energy release method described above are implemented when the computer-executable program is executed by a processor.

**Claims**

1.   An energy release method for a power battery, wherein the energy release method comprises:

    acquiring a signal indicating thermal runaway of a battery cell in the power battery; and
    electrically connecting the power battery to a discharge element to discharge the power battery to a maximum safe state of charge satisfying exothermic reactions are mild under thermal runaway conditions or a state of charge lower than the maximum safe state of charge, wherein satisfying exothermic reactions are mild is that a temperature per unit volume of the battery cell in the power battery under thermal runaway conditions does not exceed its thermal runaway trigger temperature.

2.   The energy release method according to claim 1, wherein a method for obtaining the maximum safe state of charge comprises:

    establishing an electrochemical model describing internal electrochemical characteristics of the power battery;
    establishing a thermal model describing heat generation of the power battery;
    coupling the electrochemical model and the thermal model through parameter transfer via electrochemical heat generation and battery temperature, wherein the electrochemical heat generation and heat generation from thermal runaway side reactions jointly serve as inputs to the thermal model to calculate temperature field distribution of the power battery; the battery temperature in the thermal model serves as an input to the electrochemical model to simulate electrochemical processes; and
    obtaining the maximum safe state of charge satisfying exothermic reactions are mild under thermal runaway conditions of the power battery through iterative calculation.

3.   The energy release method according to claim 2, wherein the heat generation of the power battery comprises Ohmic heat, polarization heat, reversible entropy change heat, and heat generation from thermal runaway side reactions; and
    wherein the heat generation from thermal runaway side reactions comprises heat generated from exothermic decomposition reaction of a battery separator, heat generated from reactions between a negative electrode active material and an electrolyte, heat generated from reactions between a positive electrode active material and the electrolyte, and heat generated from oxidative decomposition reactions of the electrolyte.

4.   The energy release method according to claim 1, wherein a discharge time of the power battery is a preset time, wherein the preset time is: obtaining a minimum time for the power battery to discharge to the maximum safe state of charge based on a maximum current that can be carried by wires connecting the power battery to the discharge element and the discharge element itself.

5.   The energy release method according to any one of claims 1 to 4, wherein the thermal runaway comprises any one or more of thermal runaway caused by overheating, thermal runaway caused by overcharging, thermal runaway caused by over-discharging, or thermal runaway caused by external force.

6.  The energy release method according to any one of claims 1 to 5, further comprising: cooling the discharge element during a discharge process of the power battery.

7.  The energy release method according to any one of claims 1 to 6, further comprising: applying maximum power cooling to battery cells not yet affected by the thermal runaway during a discharge process of the power battery.

8.  An energy release device for a power battery, wherein the energy release device for the power battery comprises:

    a sensing module, configured to send a signal indicating whether any single cell or battery module in the power battery is experiencing thermal runaway;
    a discharge module, comprising a switch and a discharge element connected in series between positive and negative electrodes of the power battery; and
    a thermal runaway management module, configured to, upon receiving a thermal runaway signal from the sensing module, control the switch to close to discharge the power battery through the discharge element.

9.  An electric vehicle, comprising the energy release device for a power battery according to claim 8.

10. The electric vehicle according to claim 9, wherein connecting wires of the energy release device for a power battery are arranged in an independent wiring harness.

11. An energy release management device for a power battery, wherein the energy release management device for a power battery comprises a memory, a processor, and a processor-executable program stored in the memory and executable in the processor, wherein when executing the processor-executable program, the processor implements the energy release method for a power battery according to any one of claims 1 to 7.

12. A computer-readable storage medium, wherein the computer-readable storage medium stores a computer-executable program thereon, and a processor when executing the computer-executable program implements the energy release method for a power battery according to any one of claims 1 to 7.

**FIG.1**

**FIG.2**

## INTERNATIONAL SEARCH REPORT

| International application No. |
| --- |
| **PCT/CN2024/115152** |

### A. CLASSIFICATION OF SUBJECT MATTER

H01M10/44(2006.01)i; H01M10/42(2006.01)i; B60L58/13(2019.01)i

According to International Patent Classification (IPC) or to both national classification and IPC

### B. FIELDS SEARCHED

Minimum documentation searched (classification system followed by classification symbols)

IPC: H01M, B60L

Documentation searched other than minimum documentation to the extent that such documents are included in the fields searched

Electronic data base consulted during the international search (name of data base and, where practicable, search terms used)

CNABS, CNTXT, ENTXT, ENTXTC, CNKI: 电池, 热失控, 放电, 降温, 冷却, 管理, 控制, battery, thermal, runaway, discharge, cool+, management, control+

### C. DOCUMENTS CONSIDERED TO BE RELEVANT

| Category* | Citation of document, with indication, where appropriate, of the relevant passages | Relevant to claim No. |
| --- | --- | --- |
| PX | CN 117276710 A (ZHEJIANG GEELY HOLDING GROUP CO., LTD. et al.) 22 December 2023 (2023-12-22) claims 1-10, and description, paragraphs 7-37 | 1-12 |
| X | CN 115189052 A (RISESUN MGL NEW ENERGY TECHNOLOGY CO., LTD.) 14 October 2022 (2022-10-14) description, paragraphs 3 and 25-54, and figures 1-6 | 1, 4-6, 8-12 |
| Y | CN 115189052 A (RISESUN MGL NEW ENERGY TECHNOLOGY CO., LTD.) 14 October 2022 (2022-10-14) description, paragraphs 3 and 25-54, and figures 1-6 | 7 |
| Y | CN 213546413 U (SVOLT ENERGY TECHNOLOGY CO., LTD.) 25 June 2021 (2021-06-25) description, paragraphs 24-32, and figures 1-2 | 7 |
| X | CN 112599867 A (SUNGROW POWER SUPPLY CO., LTD.) 02 April 2021 (2021-04-02) description, paragraphs 71-137, and figures 1-6 | 1, 4-6, 8-12 |
| X | WO 2023094416 A1 (POLESTAR PERFORMANCE AB) 01 June 2023 (2023-06-01) description, page 5, line 26 to page 15, line 24, and figures 1-4 | 1, 4-6, 8-12 |

☑ Further documents are listed in the continuation of Box C. ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **08 November 2024** | **13 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/115152** |

**C.    DOCUMENTS CONSIDERED TO BE RELEVANT**

| Category* | Citation of document, with indication, where appropriate, of the relevant passages | Relevant to claim No. |
|---|---|---|
| Y | CN 115626089 A (CHERY NEW ENERGY AUTOMOBILE CO., LTD.) 20 January 2023 (2023-01-20) <br> description, paragraphs 5-57, and figures 1-4 | 7 |
| A | CN 110110358 A (BEIHANG UNIVERSITY) 09 August 2019 (2019-08-09) <br> entire document | 1-12 |
| A | CN 113094768 A (CATARC (TIANJIN) AUTOMOTIVE ENGINEERING RESEARCH INSTITUTE CO., LTD.) 09 July 2021 (2021-07-09) <br> entire document | 1-12 |

Form PCT/ISA/210 (second sheet) (July 2022)

## INTERNATIONAL SEARCH REPORT
### Information on patent family members

International application No.

**PCT/CN2024/115152**

| Patent document cited in search report | | | Publication date (day/month/year) | Patent family member(s) | | | Publication date (day/month/year) |
|---|---|---|---|---|---|---|---|
| CN | 117276710 | A | 22 December 2023 | None | | | |
| CN | 115189052 | A | 14 October 2022 | None | | | |
| CN | 213546413 | U | 25 June 2021 | None | | | |
| CN | 112599867 | A | 02 April 2021 | None | | | |
| WO | 2023094416 | A1 | 01 June 2023 | US | 2023163370 | A1 | 25 May 2023 |
| | | | | US | 12027675 | B2 | 02 July 2024 |
| | | | | EP | 4437613 | A1 | 02 October 2024 |
| CN | 115626089 | A | 20 January 2023 | None | | | |
| CN | 110110358 | A | 09 August 2019 | None | | | |
| CN | 113094768 | A | 09 July 2021 | None | | | |

Form PCT/ISA/210 (patent family annex) (July 2022)